# EUROPÄISCHE PATENTSCHRIFT

(11) **EP 0 669 743 B1**
(45) Veröffentlichungstag und Bekanntmachung des Hinweises auf die Patenterteilung: **23.04.1997**
(21) Anmeldenummer: 95102513.9
(22) Anmeldetag: 22.02.1995
(51) Int. Cl.: H04M 1/00

(54) **Personalcomputer mit einer Verbindung zu einer Basisstation eines drahtlosen Fernsprechsystems**
Personal computer with a connection to a base station of a cordless telephone system
Ordinateur personnel avec une connexion à une station de base d'un réseau téléphonique sans fil

(30) Priorität: 28.02.1994 DE 4406508
(43) Veröffentlichungstag der Anmeldung: 30.08.1995
(73) Patentinhaber: SIEMENS AKTIENGESELLSCHAFT, 80333 München (DE)
(72) Erfinder: Langmantel, Ernst, Dipl.-Ing., A-1210 Wien (AT)

(56) Entgegenhaltungen:
- EP-A- 0 476 755
- TELCOM REPORT, Bd. 15, Nr. 2, März 1992 - April 1992 MÜNCHEN, DE, Seiten 77-79, XP 000274590 E. V. HIRSCHMUGL 'DIE COMPUTER-CONNECTION. Wählhilfe-Interface und Hicom-PC-Karte für rechnergestützte Sprachverbindungen'
- MOTOROLA TECHNICAL DEVELOPMENTS, Bd. 20, SCHAUMBURG, ILLINOIS US, Seiten 110-111, XP 000403841 W.S.HUI ET AL. 'CT2 BASE AND HANDSET WITH BUILT-IN MODEM'

## Beschreibung

Die Erfindung betrifft ein Kommunikationssystem mit einem Personalcomputer, dem zumindest ein drahtlos an eine Basis-station angeschlossenes Kommunikationsendgerät zugeordnet ist, wobei die Basisstation mit einer Kommunikationsanlage verbunden ist.

Drahtlose Fernsprechsysteme umfassen eine Basisstation - bzw. ein Festteil -, an die über eine Funkverbindung ein oder mehrere Kommunikationsendgeräte - bzw. Mobilteile - angeschlossen sind. Die Funkübertragung erfolgt beispielsweise gemäß dem DECT - Standard (Digital European Cordless Telephony) oder dem GSM - Standard (Group Special Mobile). In diesen Standards sind neben den funktechnischen Festlegungen die Kanalstrukturen für einen drahtlosen Anschluß mehrerer Kommunikationsendgeräte definiert. Die Basisstationen sind mit Hilfe bekannter Übertragungstechniken - z.B. analoge oder digitale Übertragungsverfahren - über ein oder mehrere Verbindungen mit einer Kommunikationsanlage - insbesondere einer Fernsprechnebenstellenanlage - verbunden. Hierzu ist die Kommunikationsanlage mit analogen a/b - Schnittstellen oder mit digitalen ISDN - Schnittstellen ausgestattet.

Aus der Europäischen Patentschrift EP 0 476 755 A2 ist ein Fernsprechapparat bekannt, der neben einem leitungsgebundenen Handapparat im Sinne eines ISDN-Komfortsprechapparates einen mobilen Handapparat umfaßt, der drahtlos an den Fernsprechapparat angeschlossen ist. Zusätzlich ist eine Adapterschaltung im Fernsprechapparat vorgesehen, über die zwischen dem Fernsprechapparat und einem Personalcomputer Daten übertragen werden.

Bei einer Zuordnung eines Kommunikationsendgerätes eines drahtlosen Fernsprechsystems zu einem Personalcomputer sind in diesem zusätzliche Programme und eine Fernsprechkarte installiert, an die sowohl die Kommunikationsanlage als auch die Basisstation angeschlossen sind. Durch diese Zuordnung wirkt das Kommunikationsendgerät des drahtlosen Fernsprechsystems im Sinne eines schnurlosen Hörers für ein PC - Telefon. Die Signalisierung vom Kommunikationsendgerät zur Kommunikationsanlage und umgekehrt kann im Personalcomputer mitgelesen, an dessen Bildschirm visualisiert und beeinflußt werden.

Darüberhinaus kann die Signalisierung für das zugeordnete Kommunikationsendgerät vollständig durch den Personalcomputer abgewickelt werden. Dies bedeutet, daß die Signalisierungsinformationen - z.B. Wahlinformationen - im Personalcomputer bedieneroberflächengesteuert - z.B. mit Hilfe der Eingabetastatur - gebildet und an die Kommunikationsanlage übermittelt werden. Diese Nutzung ist aus telcom report, Band 15, Nr. 2, März 1992 bis April 1992, München, DE, Seiten 77 bis 79; E.V. Hirschmugel bekannt. Dabei wird ein Personalcomputer über eine Hicom-PC-Karte mit einer Kommunikationsanlage verbunden, wobei an den Personalcomputer ebenfalls ein Komforttelefon angeschlossen ist. Aufgrund der komfortablen Bedieneroberfläche und Visualisierung am Bildschirm des Personalcomputers wird eine komfortable Signalisierung für die zugeordneten Kommunikationsendgeräte erreicht und zusätzlich sind unterschiedliche, die Signalisierung unterstützende Funktionen - z.B. ein Telefonverzeichnis mit Suchprozedurenkomfortabel realisierbar.

Eine derartige Kommunikationsanordnung eines Personalcomputers mit einem zugeordneten Kommunikationsendgerät eines drahtlosen Fernsprechsystems erfordert einen erheblichen programmtechnischen und schaltungstechnischen Aufwand im Personalcomputer - zusätzliche Fernsprechkarte einschließlich der Programme.

Die der Erfindung zugrundeliegende Aufgabe besteht darin, die Einbeziehung eines Personalcomputers für eine komfortable Bedieneroberfläche eines Kommunikationsendgerätes eines drahtlosen Fernsprechsystems zu verbessern. Die Aufgabe wird ausgehend von einem Kommunikationssystem gemäß den Merkmalen des Oberbegriffs des Patentanspruchs 1 durch dessen kennzeichnende Merkmale gelöst.

Der wesentliche Aspekt des erfindungsgemäßen Kommunikationssystems ist darin zu sehen, daß die Basisstation mit dem zumindest einen Personalcomputer über eine Verbindung verbunden ist, und daß die Basisstation derart ausgestaltet ist, daß die von der Kommunikationsanlage übermittelten Signalisierungsinformationen an das zumindest eine Kommunikationsendgerät und an den zumindest einen Personalcomputer und/oder die in dem zumindest einem Kommunikationsendgerät oder in dem zumindest einen Personalcomputer gebildeten oder gespeicherten Signalisierungsinformationen an die Kommunikationsanlage weitergeleitet werden. Zusätzlich kann die **Basisstation** derart gestaltet werden, daß die im **Personalcomputer** bzw. im ordneten Kommunikationsendgerät gebildeten **Signalisierungsinformationen** über die Verbindung an das zugeordnete nikationsendgerät bzw. an den **Personalcomputer** übermittelt werden - Anspruch 2. Durch die Verbindung der Basisstation mit dem Personalcomputer kann auf eine aufwendige Fernsprechkarte im Personalcomputer verzichtet werden. Die Verbindung ist hierbei vorteilhaft in der Basisstation und im Personalcomputer an eine Signalisierungsschnittstelle angeschlossen - Anspruch 5. Bei einer vorteilhaften Benutzung einer personalcomputergemäßen Datenschnittstelle - insbesondere die serielle, CCITT-gemäße V.24 - Datenschnittstelle - als lisierungsschnittstelle - Anspruch 6 -, die in fast jedem Personalcomputer zur Verfügung steht, wird bereits durch Einbringen geeigneter Programme die Zuordnung eines tionsendgerätes eines drahtlosen Fernsprechsystems zu einem Personalcomputer bewirkt. Da eine Realisierung der sierungsschnittstelle in der Basistation des drahtlosen sprechsystems aufgrund der bereits vorhandenen, mitbenutzbaren Komponenten durch erheblich geringeren, insbesondere schaltungstechnischen Aufwand gegenüber einer Realisierung mit einer Fernsprechkarte erreicht wird, stellt das erfindungsgemäße Kommunikationssystemkonzept mit Signalisierungsschnittstellen in der Basisstation und im Personalcomputer, an die die Verbindungen angeschlossen sind, eine besonders wirtschaftliche Konzeption dar. Ein weiterer wesentlicher Vorteil der erfindungsgemäßen Konzeption gegenüber einer Lösung mit Fernsprechkarten ist darin zu sehen, daß bei einem Ausfall des **Personalcomputers** die Funktionsfähigkeit des zugeordneten Kommunikationsendgerätes uneingeschränkt erhalten bleibt.

Gemäß einer weiteren vorteilhaften Ausgestaltung ist die Basisstation und jeder weitere Personalcoputer jeweils über eine weitere Verbindung verbunden , wobei jedem weiteren Personalcomputer zumindest ein drahtlos an die Basisstation angeschlossenes Kommunikationsendgerät zugeordnet ist - Anspruch 3. Durch die vorteilhafte Mehrfachanordnung von Verbindungen mit mehreren Signalisierungsschnittstellen in der Basisstation und in den Personalcomputern werden weitere Fernsprechkarten in weiteren Personalcomputern eingespart und der schaltungs- und programmtechnische Aufwand nochmals erheblich vermindert.

Eine Verbindungsvervielfachung für weitere Personalcomputer kann vorteilhaft dadurch erreicht werden, daß an die Basisstation eine Verbindungsvervielfacheinrichtung angeschlossen ist, die mit den weiteren Personalcomputern jeweils über eine Verbindung verbunden ist, wobei jedem weiteren Personalcomputer zumindest ein drahtlos an die Basisstation angeschlossenes Kommunikationsendgerät zugeordnet ist - Anspruch 4. Die Verbindungsvervielfacheinrichtung ist vorteilhaft durch eine Schnittstellenvervielfacheinrichtung oder durch ein lokales Netz realisiert - Anspruch 7. Bei den bekannten lenvervielfacheinrichtungen wird die Umsteuerung des Informationsflusses an die weiteren Signalisierungsschnittstellen beispielsweise durch eine in der Basisstation gebildete und an die Schnittstellenvervielfacheinrichtung übermittelte Umsteuerinformation bewirkt. Die Verbindungsvervielfacheinrichtung ist alternativ durch ein LAN (Local Area Network) realisierbar - Anspruch 7 -, wobei alle Netztypen, wie z.B. Busnetz, Ringnetz oder Sternnetze geeignet sind. Die rungsschnittstelle, insbesondere eine V.24 - Datenschnittstelle, ist in den Netzzugriffseinrichtungen der lokalen Netze üblicherweise verfügbar. In der Basisstation sind im Sinne der Steuerung der zu übermittelnden Signalisierunginformationen an den betreffenden Personalcomputer ledigich die Netzadressen der betreffenden Personalcomputer zu bilden und an die Zugriffseinrichtung des lokalen Netzes zu übermitteln. Die Verbindungsvervielfacheinrichtung eines lokalen Netzes ist in einen der Personalcomputer integrierbar, d.h. durch eine Integration einer Netzzugriffseinrichtung und geeigneter Programme wird der Anschluß an ein lokales Netz, beispielsweise an ein lokales Busnetz, bewirkt.

Gemäß einer weiteren vorteilhaften Ausgestaltung der Erfindung sind in der Basisstation programmtechnische Mittel zur Steuerung der von der Kommunikationsanlage oder der drahtlos an die Basisstation angeschlossenen Kommunikationsendgeräte oder von den Personalcomputern übermittelten Signalisierungsinformationen vorgesehen - Anspruch 8. Ein programmtechnisches Mittel stellt beispielsweise eine Signalisierungssteuerungsroutine dar, die in einem Programmspeicher einer einrichtung der Basisstation, insbesondere in einem zessorsystem, gespeichert ist.

Im Personalcomputer ist erfindungsgemäß eine programmtechnisch realisierte Signalisierungsroutine zum bedieneroberflächengesteuerten Bilden und Bearbeiten von Signalisierungsinformationen und zum Anzeigen der gebildeten und der von der Basisstation übermittelten Signalisierungsinformationen auf einer Bildschirmeinrichtung des Personalcomputers vorgesehen - Anspruch 9. Hierbei kann beispielsweise jedem einem Personalcomputer zugeordneten Kommunikationsendgerät eines drahtlosen Fernsprechsystems ein Bereich des Bildschirmes zur Anzeige der eingegebenen und zu übermittelnden bzw. übermittelten Signalisierungsinformationen zugeordnet werden. Die Darstellung der Kommunikationsendgeräte auf dem Bildschirm kann beispielsweise auf die Realisierung des Kommunikationsendgerätes abgestimmt werden, wobei das Kommunikationsendgerät vorteilhaft bedieneroberflächenbezogen dargestellt ist.

Im folgenden wird das erfindungsgemäße Kommunikationssystem anhand von vier Blockschaltbildern näher erläutert. Dabei zeigen
- FIG 1: ein Kommunikationssystem mit einer Kommunikationsanlage, einer Basisstation und mit einem Personalcomputer mit mindestens einem zugeordneten, "drahtlosen" Kommunikationsendgerät,
- FIG 2: ein Kommunikationssystem mit einer Kommunikationsanlage, einer Basisstation und mit mehreren Personalcomputern mit jeweils mindestens einem zugeordneten, "drahtlosen" Kommunikationsendgerät,
- FIG 3: ein Kommunikationssystem mit einer Kommunikationsanlage, einer Basisstation mit angeschlossener stelleneinrichtung und mit mehreren Personalcomputern mit jeweils mindestens einem zugeordneten, "drahtlosen" Kommunikationsendgerät, und
- FIG 4: den Aufbau einer Basisstation.

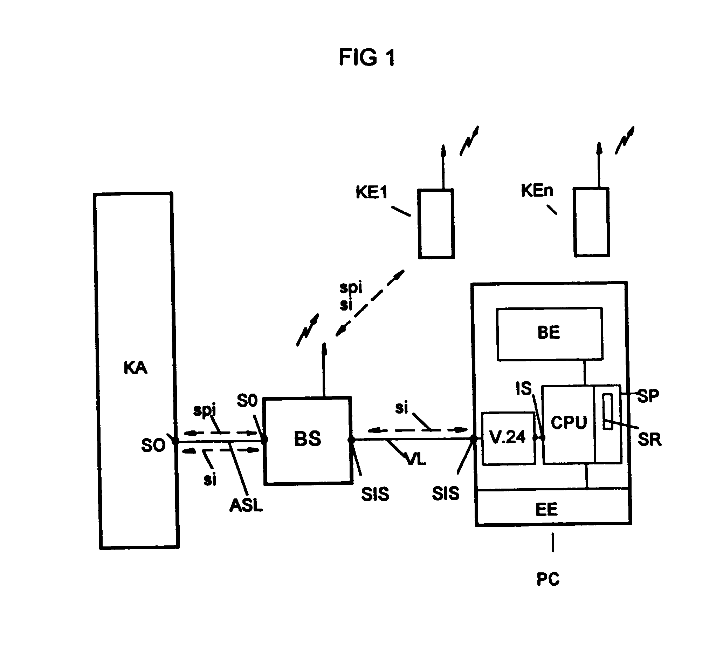

FIG 1 zeigt eine Kommunikationsanlage KA, an die über eine Anschlußleitung ASL eine Basisstation BS eines drahtlosen Fernsprechsystems angeschlossen ist. Die Kommunikationsanlage KA stellt beispielsweise eine private Fernmeldenebenstellenanlage dar, die für den Anschluß der Basisstation BS mit einer ISDN - Basisschnittstelle S0 ausgestattet ist. Analog hierzu weist die Basisstation BS eine gleichartig realisierte ISDN - Basisschnittstelle S0 auf. An die Basisstation BS ist drahtlos, d.h. über eine Funkverbindung, zumindest ein Kommunikationsendgerät KE1..n angeschlossen. Für das Ausführungsbeispiel sei angenommen, daß die Funkverbindung und die Kanalstruktur innerhalb der Funkverbindung gemäß dem DECT-Standard realisiert sind. Dies bedeutet, daß an die Basisstation BS drahtlos zwölf Kommunikationsendgeräte KE mit bidirektionaler Sprachübertragung blockierungsfrei anschließbar sind. Über die Funkverbindung werden die in den Kommunikationsendgeräten KE1..n gebildeten und die von der Kommunikationsanlage KA übermittelten Signalisierungsinformationen si sowie die bidirektional zu übermittelnden Sprachinformationen spi übertragen.

Die Basisstation BS weist zusätzlich eine Signalisierungsschnittstelle SIS auf, die mit einer gleichartigen sierungsschnittstelle SIS eines Personalcomputers PC über eine Leitung VL verbunden ist. Vorteilhaft ist diese Signalisierungsschnittstelle SIS durch eine CCITT-gemäße V.24 - Schnittstelle realisiert, die an einem Personalcomputer PC üblicherweise verfügbar ist. Im Personalcomputer PC ist die Signalisierungsschnittstelle SIS durch ein Schnittstellenmodul V.24 realisiert. In diesem Schnittstellenmodul V.24 wird die Signalisierungsschnittstelle SIS physikalisch realisiert, d.h. die Schnittstellenleitungen installiert und die Eigenschaften einer Personalcomputer-internen Schnittstelle IS werden an die elektrischen Eigenschaften der Signalisierungsschnittstelle SIS angepaßt. Das Schnittstellenmodul V.24 ist über diese interne Schnittstelle IS mit dem Mikroprozessorsystem CPU des Personalcomputers PC verbunden. Ein Personalcomputer weist bekannterweise weiterhin eine Eingabeeinrichtung EE - die bekannte Eingabetastatur und Maus - und eine Bildschirmeinrichtung BE auf.

Erfindungsgemäß werden mit einer in einem Speicher SP des Mikroprozessorsystems CPU gespeicherten Signalisierungsroutine SR, die beispielsweise mit Hilfe der Eingabeeinrichtung EE eingegebenen Signalisierungsinformationen si - z.B. Wählinformationen - an die Bildschirmeinrichtung BE gesteuert und dort angezeigt. Alternativ ist mit Hilfe der Signalisierungsroutine SR beispielsweise aus einem im Speicher SP gespeicherten Telefonbuch eine Signalisierungsinformation si, d.h. eine Rufnummer, auswählbar und an der Bildschirmeinrichtung BE anzeigbar. Nach einer weiteren Eingabe werden die Signalisierungsinformationen si über die Basisstation BS an die munikationsanlage KA übermittelt und dort im Sinne eines bindungsaufbaus mit einem weiteren, an die Kommunikationsanlage KA angeschlossenen, nicht dargestellten Kommunikationsendgerät KE bewertet. Dies bedeutet, daß für eines der diesem Personalcomputer PC zugeordneten Kommunikationsendgeräte KE1...KEn ein Verbindungsaufbau auf komfortable Weise durchgeführt werden kann. Des weiteren können zusätzliche Leistungsmerkmale während oder vor einer Kommunikationsbeziehung zwischen den Kommunikationsendgeräten KE mit Hilfe des Personalcomputers PC aufgrund zusätzlich implementierter führungsroutinen wesentlich komfortabler gesteuert werden.

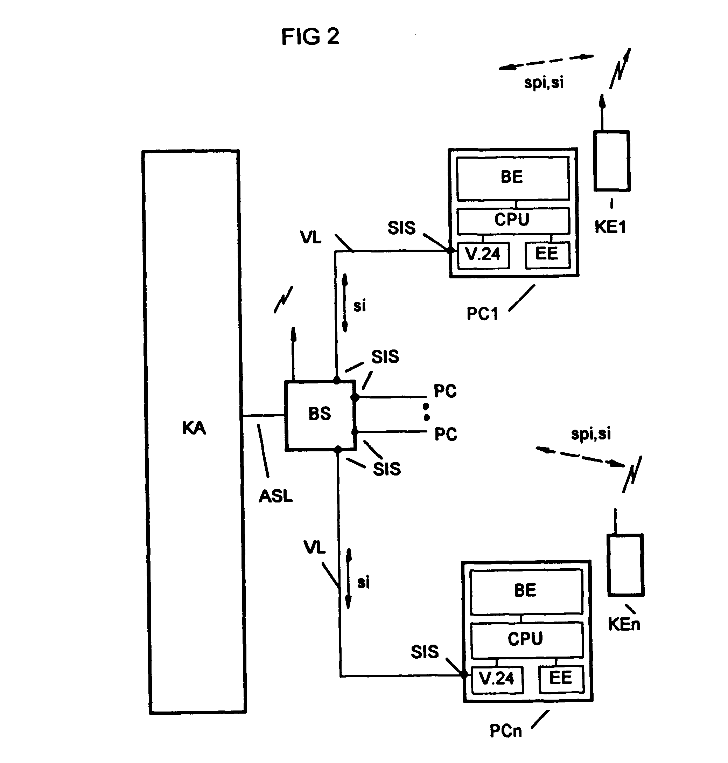

FIG 2 zeigt eine gleichartig zu FIG 1 realisierte Kommunikationsanlage KA, an die über eine Anschlußleitung ASL ebenfalls eine Basisstation BS eines drahtlosen Fernsprechsystems angeschlossen ist. An dieser Basisstation sind im Gegensatz zu FIG 1 mehrere Signalisierungsschnittstellen SIS angeordnet. Jede dieser Signalisierungsschnittstellen SIS ist über eine Leitung VL mit einer Signalisierungsschnittstelle SIS eines Personalcomputers PC1...PCn verbunden. Bei einer DECT-gemäßen Realisierung der Basisstation BS sind beispielsweise zwölf Signalisierungsschnittstellen SIS an der Basisstation BS vorzusehen. In den Personalcomputern PC1...PCn ist die Signalisierungsschnittstelle SIS jeweils in einer Schnittstelleneinheit V.24 realisiert. Die prozeduralen und physikalischen Eigenschaften der Signalisierungsschnittstelle SIS entsprechen der CCITT-Empfehlung V.24. Die Personalcomputer PC1...PCn weisen desweiteren - wie in FIG 1 - eine Bildschirmeinrichtung BE, ein Mikroprozessorsystem CPU und eine Eingabeeinrichtung EE auf.

Für das Ausführungsbeispiel sei angenommen, daß jedem Personalcomputer PC1...PCn jeweils ein Kommunikationsendgerät KE1...KEn zugeordnet ist. Alternativ sind, wie in FIG 1 dargestellt, jedem Personalcomputer PC1...PCn mehrere tionsendgeräte zuordenbar. Die Funkverbindung zwischen der Basisstation BS und den drahtlos an die Basisstation BS angeschlossenen Kommunikationsendgeräten KE1...KEn ist gemäß dem DECT-Standard realisiert.

Die komfortable Eingabe und Anzeige bzw. die Beeinflussung von Signalisierungsinformationen si wird - wie in FIG 1 erläutert - durchgeführt. Des weiteren entspricht der Informationsfluß der Signalisierungsinformationen si und der informationen spi bezogen auf einen Personalcomputer PC1...PCn und dem jeweiligen, zugeordneten Kommunikationsendgerät KE1...KEn dem in FIG 1 dargestellten Informationsfluß.

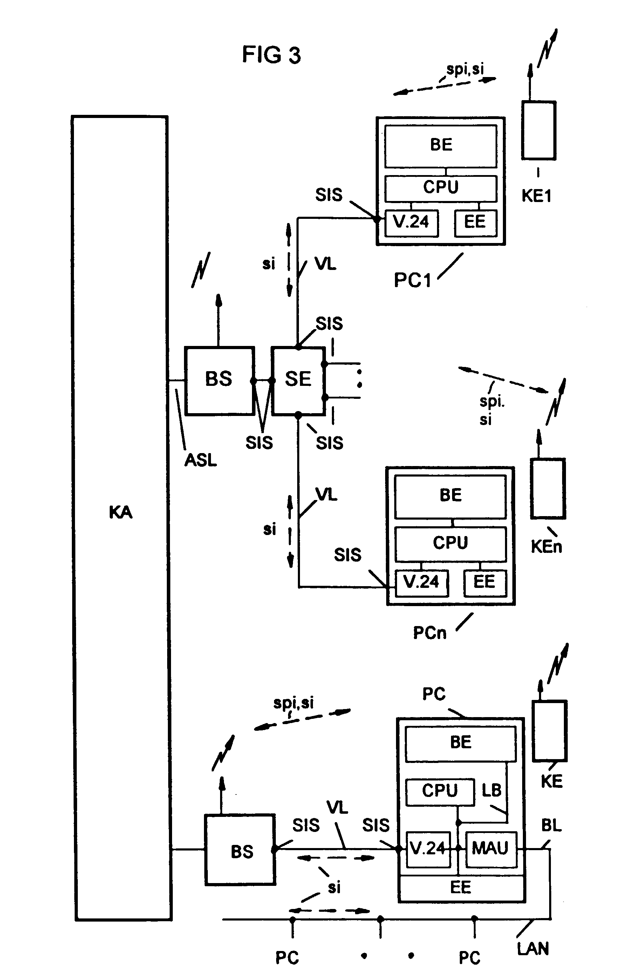

FIG 3 zeigt eine Kommunikationsanlage KA, eine daran angeschlossene Basisstation BS und Personalcomputer PC1...PCn. Diese Komponenten sind gleichartig, wie in FIG 1 und FIG 2 beschrieben, aufgebaut. Im Gegensatz zu FIG 2 weist die Basisstation BS lediglich eine Signalisierungsschnittstelle SIS auf, die mit einer Schnittstelleneinrichtung SE verbunden ist. An dieser Schnittstelleneinrichtung SE sind mehrere gnalisierungsschnittstellen SIS realisiert, wobei jeweils eine dieser Signalisierungsschnittstellen SIS mit jeweils einer Signalisierungsschnittstelle SIS der Personalcomputer PC1...PCn über eine Leitung VL verbunden ist. Wie in FIG 2 ist jedem der Personalcomputer PC1...PCn jeweils zumindest ein Kommunikationsendgerät KE1...KEn zugeordnet.

Die Schnittstelleneinrichtung SE ist beispielsweise durch einen handelsüblichen Schnittstellenvervielfacher oder durch ein lokales Netz LAN realisierbar.

Eine Realisierung mit einem lokalen Netzes LAN ist in FIG 3 im unteren Bereich dargestellt. Hierbei ist eine weitere, mit der Kommunikationsanlage KA verbunde Basisstation BS über eine weitere Verbindung VL bzw.

weitere Signalisierungsschnittstellen SIS mit einem weiteren Personalcomputer PC verbunden. Der weitere Personalcomputer PC ist gleichartig wie in FIG 1 und FIG 2 beschrieben aufgebaut und diesem ist ein drahtlos mit der weiteren Basisstation BS verbundenes Kommunikationsendgerät KE zugeordnet. Darüberhinaus weist der Personalcomputer PC eine Netzzugriffseinrichtung MAU auf, die über einen lokalen Bus LB mit den Komponenten V.24, CPU, BE, EE des Personalcomputers PC kommuniziert. An diese Netzzugriffseinrichtung MAU ist eine Busleitung BL eines lokalen Netzes LAN angeschlossen. Die das Kommunikationsmedium eines Busnetzes repräsentierende Busleitung BL ist mit weiteren Personalcomputern PC verbunden, wobei die weiteren Personalcomputer PC hierzu jeweils mit einer Netzzugriffseinrichtung MAU ausgestattet sind. Den weiteren nalcomputern PC ist jeweils ein weiteres, an die weitere Basisstation BS drahtlos angeschlossenes Kommunikationsendgerät KE - nicht dargestellt - zugeordnet. Die in den weiteren Personalcomputern PC gebildeten oder an diese zu übermittelnden Signalisierungsinformationen si werden über das lokale Netz LAN an den oder von dem an die Basisstation BS angeschlossenen Personalcomputer PC übermittelt. In diesem Personalcomputer PC werden die von der Basisstation BS übermittelten Signalisierungsinformationen si in lokale-Netz-gemäße Informationspakete einfügt und gezielt, d.h. mit einer entsprechenden Netzadresse versehen, über die Busleitung BL an den betreffenden Personalcomputer PC übermittelt. Analog hierzu werden aus den über das lokale Netz LAN übermittelten Informationspaketen die Signalisierungsinformationen si entnommen und an die weitere Basisstation BS übermittelt. Diese Netzadressen werden in der Basisstation BS bzw. in den weiteren Personalcomputern PC gebildet. Der Fluß der Signalisierungs- und Sprachinformationen si, spi entspricht bezogen auf eine Signalisierungsschnittstelle SIS in der Basisstation BS und den zugeordneten Kommunikationsendgerat KE dem in FIG 2. Die komfortable Eingabe, Anzeige und Beeinflussung der sierungsinformationen si werden, wie in FIG 1 erläutert, wirkt.

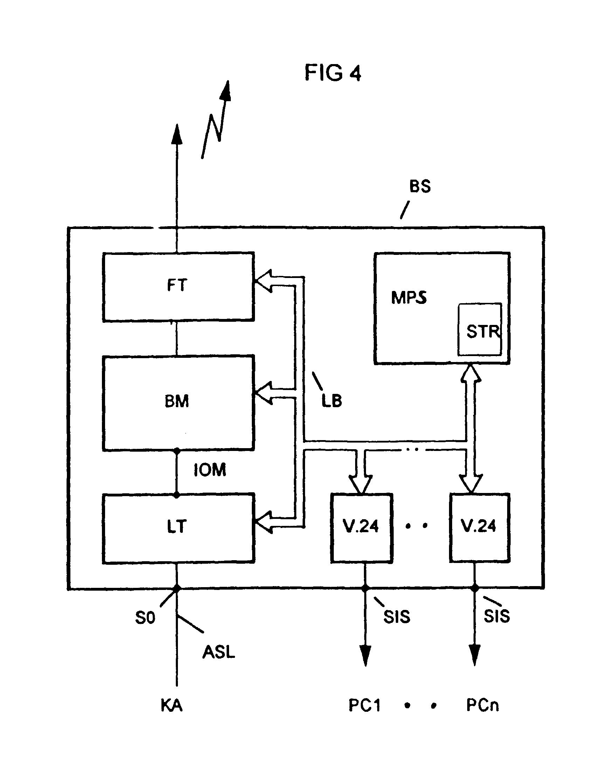

FIG 4 zeigt in einem Blockschaltbild den Aufbau einer Basisstation BS. Die mit der Kommunikationsanlage KA verbundene Anschlußleitung ASL ist in der Basisstation BS an einen Leitungsteil LT geführt. In jedem Leitungsteil LT ist physikalisch und prozedural ein ISDN - Basisanschluß S0 realisiert. Alternativ ist zusätzlich in den Leitungsteil LT ein Übertragungsverfahren gemäß dem Zeitgetrenntlage-Übertragungsverfahren integrierbar. Bei einem ISDN-Anschluß - siehe FIG 1- werden im Leitungsteil LT die Signalisierungsinformationen si der Signalisierungskanäle bzw. D-Kanäle gemäß dem HDLC-Übertragungsverfahren empfangen bzw. gesendet und für eine Übermittlung über einen mit dem Leitungsteil LT verbundenen lokalen Bus LB zu einem Mikroprozessorsystem MPS aufbereitet, d.h. für eine Übermittlung über Daten-, Adreß- und Steuerleitungen des lokalen Busses LB angepaßt.

Der Leitungsteil LT ist über eine ISDN-orientierte Schnittstelle IOM mit einem zusätzlich an den lokalen Bus LB angeschlossenen Burstmodul BM verbunden. Durch dieses Burstmodul BM werden die empfangenen bzw. die zu sendenden Sprach- und Signalisierungsinformationen si, spi gemäß dem DECT-Standard für drahtlose Telefone in entsprechende Übertragungsrahmen eingefügt und hinsichtlich ihrer physikalischen Eigenschaften derart aufbereitet, daß sie an ein in der Basisstation BS angeordnetes Funkteil FT übertragbar sind. Mit Hilfe des Funkteils FT werden die Sprach- und Signalisierungsinformationen spi, si ebenfalls gemäß dem DECT-Standard mit einer Funkfrequenz von 1900 MHz übertragen. Nach dem DECT-Standard können zwölf bidirektional gerichtete 32 KBit/s-Sprachkanäle einschließlich der zugehörigen Signalisierungsinformationen drahtlos übermittelt werden. Dies bedeutet, daß an diese Basisstation BS zwölf drahtlose Kommunikationsendgeräte KE, d.h. zwölf Funktelefone, blockierungsfrei angeschlossen werden können.

Der lokale Bus LB der Basisstation BS ist zusätzlich mit dem Funkteil FT und mit Schnittstelleneinheiten V.24 verbunden. Die Anzahl der Schnittstelleneinheiten V.24 richtet sich nach der Anzahl der anzuschließenden Personalcomputer PC. Zumindest sollte die Basisstation BS im Grundausbau eine Schnittstelleneinheit V.24 aufweisen. Für das Ausführungsbeispiel sei angenommen, daß die in der Schnittstelleneinheit V.24 vorgesehene Signalisierungsschnittstelle SIS gemäß dem CCITT-Standard V.24 realisiert ist. In der Schnittstelleneinheit V.24 werden folglich die über den lokalen Bus LB übermittelten Informationen hinsichtlich ihrer physikalischen und prozeduralen Eigenschaften an die physikalischen und prozeduralen Eigenschaften der V.24 - Schnittstelle angepaßt. Für eine Realisierung der Schnittstelleneinheit V.24 sind handelsübliche Schnittstellenschaltkreise verfügbar.

Das Mikroprozessorsystem MPS ist neben einem Mikroprozessor MP mit einem Arbeits- und einem Programmspeicher PS ausgestattet. Hierbei sind im Arbeitsspeicher im wesentlichen die nichtresistenten Informationen und im Programmspeicher die die Basisstation BS überwachenden und koordinierenden Programme gespeichert. In diesem Programmspeicher ist eine Steuerungsroutine STR gespeichert, mit deren Hilfe die Steuerung der vom **Personalcomputer** (PC), der **Kommunikationsanlage** (KA) oder den Kommunikationsendgeräten (KE) übermittelten **Signalisierungsinformationen** si an die angeschlossene **Kommunikationsanlage** (KA), die Kommunikationsendgeräte (KE) und die **Personalcomputer** (PC) bewirkt wird. Hierbei ist die Zuordnung **Personalcomputer** (PC)- Kommunikationsendgerät (KE) in der Steuerungsroutine STR durch entsprechend gespeicherte Informationen angegeben. Diese Zuordnung kann durch betriebstechnische Eingaben an der **Basisstation** (BS) oder an der **Kommunikationsanlage** (KA) festgelegt werden. Alternativ sind bei Anschluß mehrerer **Basisstationen** (BS) an eine **Kommunikationsanlage** (KA) - ein mehrzellulares, drahtloses Fernsprechsystem bildend - die in der Steuerungsroutine STR gespeicherten Zuordnungen **Personalcomputer** (PC) - Kommunikationsendgerät (KE) vorteilhaft durch entsprechende, d.h. betriebstechnisch wirkende Eingaben am jeweiligen **Personalcomputer** (PC) bzw. Kommunikationsendgerät (KE) aktualisierbar. Diese Aktualisierung ist besonders für Kommunikationsendgeräte (KE) vorteilhaft, die als PC -Telfone an mehreren **Personalcomputern** (PC) innerhalb mehrerer Funkzellen eingesetzt werden.

## Patentansprüche

1. Kommunikationssystem mit einer Kommunikationsanlage (KA) und zumindest einer mit der Komnunikationsanlage (KA) verbundenen Basisstation (BS),
- an die zumindest ein Kommunikationsendgerät (KE) drahtlos angeschlossen ist und
- über die Signalisierungsinformationen (si) zwischen der Kommunikationsanlage (KA) und dem Kommunikationsendgerat (KE) ausgetauscht werden,
- wobei dem zumindest einen Kommunikationsendgerät (KE) ein Personalcomputer (PC) zugeordnet ist,
**dadurch gekennzeichnet**,
- daß die Basisstation (BS) und der zumindest eine Personalcomputer (PC) über eine Verbindung (VL) verbunden sind,
-- wobei im Personalcomputer (PC) Signalisierungsinformationen (si) gebildet und/oder gespeichert werden,
- und daß die Basisstation (BS) derart ausgestaltet ist,
-- daß die vom zumindest einen Personalcomputer (PC) übermittelten Signalisierungsinformationen (si) an die Kommunikationsanlage (KA) weitergeleitet werden und
-- daß die von der Kommunikationsanlage (KA) an das zumindest eine Komnunikationsendgerät (KE) abgegebenen Signalisierungsinformationen (si) zusätzlich an den zugeordneten Personalcomputer (PC) vermittelt werden.

2. Kommunikationssystem nach Anspruch 1,
**dadurch gekennzeichnet**,
daß die Basisstation (BS) derart ausgestaltet ist,
daß die im Kommunikationsendgerät (KE) gebildeten bzw. im zugeordneten Personalcomputer (PC) gebildeten und/oder gespeicherten Signalisierungsinformationen (si) über die Verbindung (VL), die Basisstation (BS) und die drahtlose Verbindung zwischen Basisstation (BS) und Kommunikationsendgerät (KE) an den zugeordneten Personalcomputer (PC) bzw. an das Kommunikationsendgerät (KE) vermittelt werden.

3. Kommunikationssystem nach Anspruch 1 oder 2,
**dadurch gekennzeichnet**,
daß die Basisstation (BS) und jeder weitere Personalcomputer (PC) jeweils über eine weitere Verbindung (VL) verbunden ist, wobei jedem weiteren Personalcomputer (PC) zumindest ein drahtlos an die Basisstation (BS) angeschlossenes Kommunikationsendgerät (KE) zugeordnet ist.

4. Kommunikationssystem nach Anspruch 1 oder 2,
**dadurch gekennzeichnet**,
daß an die Basisstation (BS) eine Verbindungsvervielfacheinrichtung (SE) angeschlossen ist, die mit weiteren Personalcomputern (PC) jeweils über eine Verbindung (VL) verbunden ist, wobei jedem weiteren Personalcomputer (PC) zumindest ein drahtlos an die Basisstation (BS) angeschlossenes Kommunikationsendgerät (KE) zugeordnet ist.

5. Kommunikationssystem nach einem der Ansprüche 1 bis 4,
**dadurch gekennzeichnet**,
daß eine Verbindung (VL) jeweils an eine im Personalcomputer (PC) und in der Basisstation (BS) oder der Verbindungsvervielfacheinrichtung (SE) realisierte Signalisierungsschnittstelle (SIS) angeschlossen ist.

6. Kommunikationssystem nach Anspruch 5,
**dadurch gekennzeichnet**,
daß die Signalisierungsschnittstellen (SIS) in der Basisstation (BS) und im Personalcomputer (PC) sowie in der Verbindungsvervielfacheinrichtung (SE) durch eine personalcomputergemäße Datenschnittstelle (V.24) realisiert ist.

7. Kommunikationssystem nach Anspruch 4,
**dadurch gekennzeichnet**,
daß die Verbindungsvervielfacheinrichtung (SE) durch eine Schnittstellenvervielfacheinrichtung (SSV) oder durch ein lokales Netz (LAN) realisiert ist.

8. Kommunikationssystem nach einem der vorhergehenden Ansprüche,
**dadurch gekennzeichnet**,
daß in der Basisstation (BS) programmtechnische Mittel (STR) zur Steuerung der von der Kommunikationsanlage (KA) oder von den drahtlos an die Basisstation (BS) angeschlossenen Kommunikationsendgeräten (KE) oder von den Personalcomputern (PC) übermittelten Signalisierungsinformationen (si) vorgesehen sind.

9. Kommunikationssystem nach einem der vorhergehenden Ansprüche,
**dadurch gekennzeichnet**,
daß in den Personalcomputern (PC) eine programmtechnisch realisierte Signalisierungsroutine (SR) zum bedieneroberflächengesteuerten Bilden und Beeinfussen von Signalisierungsinformationen (si) und zum Anzeigen der gebildeten und der von der Basisstation (BS) übermittelten Signalisierungsinformationen (si) auf einer Bildschirmeinrichtung des Personalcomputers (PC) vorgesehen ist.

10. Kommunikationssystem nach einem der vorhergehenden Ansprüche,
**dadurch gekennzeichnet**,
daß die Basisstation (BS)
- einen die Verbindungen (VL) mit der Kommunikationsanlage (KA) mit Hilfe eines Übertragungsverfahrens realisierenden Leitungsteil (LT) aufweist, der mit einen lokalen Bus (LB) und
- der über eine ISDN - orientierte Schnittstelle (IOM) mit einem die Signalisierungsinformationen (si) ein- und ausblendenden und die Kanalstruktur für eine Funkübertragung realisierenden Burstmodul (BM) verbunden ist,
- sowie das mit dem lokalen Bus (LB) verbundene Burstmodul (BM) mit einem die Funkübertragung bewirkenden Funkteil (FT) verbunden ist,
- wobei der lokale Bus (LB) desweiteren mit dem Funkteil (FT),
- mit die Signalisierungsschnittstellen (SIS) realisierenden Schnittstelleneinheiten (V.24) und
- mit einem die Signalisierungsinformationen (si) zu den Signalisierungsschnittstellen (SIS) und zum Funkteil (FT) steuernden sowie die Basisstation (BS) steuernden und überwachenden Mikroprozessorsystem (MPS)
verbunden ist.

## Claims

1. Communication system having a communication installation (KA) and at least one base station (BS), connected to the communication installation (KA),
- to which base station at least one communication terminal (KE) is wirelessly connected and
- via which signalling information (si) is exchanged between the communication installation (KA) and the communication terminal (KE),
- the at least one communication terminal (KE) being assigned a personal computer (PC),
characterized
- in that the base station (BS) and the at least one personal computer (PC) are connected via a connection (VL),
-- signalling information (si) being formed and/or stored in the personal computer (PC),
- and in that the base station (BS) is designed in such a way
-- that the signalling information (si) transmitted from the at least one personal computer (PC) is passed on to the communication installation (KA) and
-- in that the signalling information (si) sent from the communication installation (KA) to the at least one communication terminal (KE) is additionally transferred to the assigned personal computer (PC).

2. Communication system according to Claim 1, characterized in that the base station (BS) is designed in such a way that the signalling information (si) formed in the communication terminal (KE) or formed and/or stored in the assigned personal computer (PC) is transferred to the assigned personal computer (PC) or to the communication terminal (KE) via the connection (VL), the base station (BS) and the wireless connection between base station (BS) and communication terminal (KE).

3. Communication system according to Claim 1 or 2, characterized in that the base station (BS) and each further personal computer (PC) are respectively connected via a further connection (VL), each further personal computer (PC) being assigned at least one communication terminal (KE), wirelessly connected to the base station (BS).

4. Communication system according to Claim 1 or 2, characterized in that connected to the base station (BS) is a connection multiplying device (SE), which is connected to further personal computers (PC) respectively via a connection (VL), each further personal computer (PC) being assigned at least one communication terminal (KE), wirelessly connected to the base station (BS).

5. Communication system according to one of Claims 1 to 4, characterized in that a connection (VL) is respectively connected to a signalling interface (SIS), realized in the personal computer (PC) and in the base station (BS) or the connection multiplying device (SE).

6. Communication system according to Claim 1, characterized in that the signalling interfaces (SIS) in the base station (BS) and in the personal computer (PC) as well as in the connection multiplying device (SE) are realized by a personal-computer-type data interface (V.24) .

7. Communication system according to Claim 4, characterized in that the connection multiplying device (SE) is realized by an interface multiplying device (SSV) or by a local area network (LAN).

8. Communication system according to one of the preceding claims, characterized in that programming means (STR) for controlling the signalling information (si) transmitted from the communication installation (KA) or from the communication terminals (KE), wirelessly connected to the base station (BS), or from the personal computers (PC) are provided in the base station (BS).

9. Communication system according to one of the preceding claims, characterized in that a signalling routine (SR), realized by programming, for the operator-interface-controlled forming and influencing of signalling information (si) and for displaying on a screen device of the personal computer (PC) the signalling information (si) formed and transmitted from the base station (BS) is provided in the personal computers (PC).

10. Communication system according to one of the preceding claims, characterized in that the base station (BS)
- has a line part (LT), which realizes the connections (VL) to the communication installation (KA) with the aid of a transmission method and is connected to a local bus (LB) and
- is connected via an ISDN-oriented interface (IOM) to a burst module (BM), which inserts and extracts the signalling information (si) and realizes the channel structure for a radio transmission,
- and the burst module (BM), connected to the local bus (LB), is connected to a radio part (FT) effecting the radio transmission,
- the local bus (LB) being further connected to the radio part (FT),
- to interface units (V.24), realizing the signalling interfaces (SIS), and
- to a microprocessor system (MPS), controlling the signalling information (si) to the signalling interfaces (SIS) and to the radio part (FT) and also controlling and monitoring the base station (BS).

## Revendications

1. Système de communication comportant une installation (KA) de communication et au moins une station (BS) de base reliée à l'installation (KA) de communication,
- au moins un terminal (KE) de communication étant connecté sans fil à la station (BS) de base,
- des informations si de signalisation étant échangées par l'intermédiaire de la station (BS) de base entre l'installation (KA) de communication et le terminal (KE) de communication,
- un ordinateur personnel (PC) étant associé au au moins un terminal (KE) de communication,
caractérisé en ce que la station (BS) de base et le au moins un ordinateur personnel (PC) sont reliés par l'intermédiaire d'une liaison (VL),
-- des informations (si) de signalisation étant formées et/ou mémorisées dans l'ordinateur personnel (PC),
- et la station (BS) de base est telle que
-- les informations (si) de signalisation transmises du au moins un ordinateur personnel (PC) soient retransmises à l'installation (KA) de communication et
-- les informations (si) de signalisation fournies par l'installation (KA) de communication à l'au moins un terminal (KE) de communication soient transmises en supplément à l'ordinateur personnel (PC) associé.

2. Système de communication suivant la revendication 1,
caractérisé en ce que
la station (BS) de base est telle que
les informations (si) de signalisation formées dans le terminal (KE) de communication ou formées et/ou mémorisées dans l'ordinateur personnel (PC) associé soient transmises, par l'intermédiaire de la liaison (VL), de la station (BS) de base et de la liaison sans fil entre la station (BS) de base et le terminal (KE) de communication, à l'ordinateur personnel (PC) associé ou au terminal (KE) de communication.

3. Système de communication suivant le revendication 1 ou 2,
caractérisé en ce que
la station (BS) de base et chaque ordinateur personnel (PC) supplémentaire sont reliés chacun par l'intermédiaire d'une liaison supplémentaire (VL), au moins un terminal (KE) de communication connecté sans fil à la station (BS) de base étant associé à chaque ordinateur personnel (PC) supplémentaire.

4. Système de communication suivant la revendiction 1 ou 2,
caractérisé en ce que
il est connecté à la station (BS) de base un dispositif (SE) de multiplication de liaisons, qui est relié à des ordinateurs personnels (PC) supplémentaires par l'intermédiaire d'une liaison (VL), au moins un terminal (KE) de communication connecté sans fil à la station (BS) de base étant associé à chaque ordinateur personnel (PC) supplémentaire.

5. Système de communication suivant l'une des revendications 1 à 4,
caractérisé en ce que
une liaison (VL) est connectée à une interface (SIS) de signalisation prévue dans l'ordinateur personnel (PC) et dans la station (BS) de base ou dans le dispositif (SE) de multiplication de liaisons.

6. Système de communication suivant la revendication 5,
caractérisé en ce que
les interfaces (SIS) de signalisation dans la station (BS) de base et dans l'ordinateur personnel (PC) ainsi que dans le dispositif (SE) de multiplication de liaisons sont constituées d'une interface V.24 de données compatible avec l'ordinateur personnel.

7. Système de communication suivant la revendication 4,
caractérisé en ce que
le dispositif (SE) de multiplication de liaisons est constitué d'un dispositif (SSV) de multiplication d'interfaces ou d'un réseau local (LAN).

8. Système de communication suivant l'une des revendications précédentes,
caractérisé en ce que
il est prévu dans la station (BS) de base des moyens (STR) de la technique des programmes pour commander les informations (si) de signalisation transmises de l'installation (KA) de communication ou des terminaux (KE) de communication connectés sans fil à la station (BS) de base ou transmises des ordinateurs personnels (PC).

9. Système de communication suivant l'une des revendications précédentes,
caractérisé en ce que
il est prévu dans les ordinateurs personnels (PC) une routine (SR) de signalisation pouvant être réalisée par un programme pour former et influencer, sous la commande de l'interface utilisateur, des informations (si) de signalisation et pour afficher les informations (si) de signalisation transmises de la station (BS) de base sur un dispositif à écran de l'ordinateur personnel (PC).

10. Système de communication suivant l'une des revendications précédentes,
caractérisé en ce que
la station (BS) de base comporte
- un circuit (LT) de ligne réalisant les liaisons (VL) avec l'installation (KA) de communication à l'aide d'un procédé de transmission, qui est relié à un bus local (LB) et
- qui est relié par l'intermédiaire d'une interface (IOM) RNIS à un module (BM) de formation de rafales faisant apparaître ou disparaître les informations (si) de signalisation et la structure de canal pour une transmission radio,
- le module (BM) de formation de rafales relié au bus local (LB) étant relié à un circuit (FT) radio provoquant la transmission radio,
- le bus local (LB) étant relié en outre au circuit (FT) radio,
- à des unités (V.24) l'interface réalisant les interfaces (SIS) de signalisation et
- à un système (MPS) à microprocesseur commandant les informations (si) de signalisation vers les interfaces (SIS) de signalisation et vers le circuit (FT) radio et commandant et contrôlant la station (BS) de base.
